# EUROPÄISCHE PATENTANMELDUNG

(11) **EP 2 012 213 A2**
(43) Veröffentlichungstag der Anmeldung: **07.01.2009**
(21) Anmeldenummer: 08011682.5
(22) Anmeldetag: 27.06.2008
(51) Int. Cl.: G05D 7/06

(54) **Verfahren zum Dosieren eines nichtflüssigen Materials und Dosiervorrichtung**

(30) Priorität: 29.06.2007 DE 102007030359
(71) Anmelder: Müller, Wolfgang, Karl, 21255 Tostedt (DE)
(72) Erfinder: Müller, Wolfgang Karl, 21255 Tostedt (DE)
(74) Vertreter: Bittner, Thomas L.

(57) **Zusammenfassung**

Die Erfindung betrifft ein Verfahren und eine Dosiervorrichtung zum kontinuierlichen Dosieren eines nichtflüssigen Materials aus einem Behälter (102), insbesondere zum Eindosieren eines nichtflüssigen Materials in eine Mehrkomponenten-Mischung. Bei dem erfindungsgemäßen Verfahren wird eine Fülldichte des Materials in einem vom Material eingenommenen Bereich des Behälters ermittelt und das Material mit einem im wesentlichen konstanten Massestrom durch eine Behälteröffnung (104) aus dem Behälter ausgebracht, indem in Abhängigkeit von der ermittelten Fülldichte ein dem Massestrom entsprechender Volumenstrom durch die Behälteröffnung eingestellt wird.

## Beschreibung

Die Erfindung betrifft ein Verfahren zum Dosieren eines nichtflüssigen Materials, insbesondere zum Eindosieren in eine Mehrkomponenten-Mischung, sowie eine Dosiervorrichtung.

### Hintergrund der Erfindung

Zur zügigen und kostengünstigen Herstellung von Gebäuden, beispielsweise als Notfallbehausung in Krisengebieten oder bei Naturkatastrophen, haben sich mehrschichtige Bauplatten bewährt. Eine solche Bauplatte ist in der Regel aus einem Schaumstoff-Kern gebildet, auf welchem beidseitig Deckschichten aufgebracht sind. Derartige Bauplatten haben aufgrund des Schaumstoff-Kerns hervorragende Wärmeisoliereigenschaften und können zugleich bei geeigneter Auswahl des Materials der Deckschichten die notwendige Formstabilität bieten, um den mit den Bauplatten hergestellten Gebäuden gegenüber ungünstigen Witterungsverhältnissen die gewünschte Widerstandsfähigkeit zu verleihen.

Die Deckschichten werden vorzugsweise aus gewebten oder ungewebten Faserstoffen gebildet, beispielsweise in Form von Glasfasermatten, welche mit einem Tränkungsmittel getränkt sind. Mittels Auswahl eines geeigneten Tränkungsmittels können die mechanischen, chemischen, physikalischen und andere Eigenschaften der Deckschichten und somit letztendlich der Bauplatten beeinflusst werden. Vorzugsweise wird als Tränkungsmittel eine harzbasierte Vergussmasse verwendet. Beispielsweise können hierzu Mehrkomponentenharze eingesetzt werden, welche ein Harz, einen Härter sowie weitere Komponenten umfassen können. Bei der Herstellung der Deckschichten werden die Komponenten des Mehrkomponentenharzes gemischt, und mit der entstandenen Mehrkomponentenharz-Mischung werden dann die Deckschichten getränkt. Neben Harz und Härter können weitere Komponenten zugegeben werden, beispielsweise feuerhemmende Stoffe, Trennmittel, Farbstoffe oder dergleichen.

Um die Komponenten in einem bestimmten Mengenverhältnis zu mischen, müssen diese dosiert werden. Die Dosierung der Komponenten erfolgt in der Regel auf der Grundlage eines vorbestimmten Masseverhältnisses, das heißt, in dem Mischer wird stets das gleiche Masseverhältnis zwischen den eingeführten Komponenten gebildet. Sofern es sich bei den Komponenten um Flüssigkeiten handelt, kann beim Mischen das gewünschte Masseverhältnis unter Berücksichtigung der Dichten der Komponenten in ein Volumenverhältnis umgerechnet werden. Da ein Volumenstrom, also ein Volumenfluss pro Zeiteinheit, beispielsweise mittels einer Durchflusszähler leicht eingestellt werden kann, ist eine kontinuierliche Dosierung von flüssigen Mischkomponenten unproblematisch.

Dies ist bei nichtflüssigen Materialien, insbesondere bei klumpigen, pulver- oder staubförmigen und somit schüttfähigen Materialien oder Medien, nicht ohne weiteres möglich, da sie keine reproduzierbare Dichte aufweisen. Bei derartigen Materialien ist aufgrund ihres Schüttverhaltens und des Anteils an eingeschlossener Luft eine direkte Korrelation zwischen Masse und Volumen nicht zu erhalten. Zum Mischen mit einem gewünschten (Masse-)Mischverhältnis muss in diesem Fall der Mischvorgang regelmäßig unterbrochen werden, um eine abgewogene Menge des Materials hinzuzufügen.

### Zusammenfassung der Erfindung

Aufgabe der Erfindung ist es, ein Verfahren zum kontinuierlichen Dosieren eines nichtflüssigen Materials und eine Dosiervorrichtung zu schaffen, mit denen eine in zeitlicher Hinsicht effizientere und auch gleichmäßigere Dosierung des nichtflüssigen Materials erreicht werden.

Die Aufgabe wird erfindungsgemäß durch ein Verfahren zum Dosieren eines nichtflüssigen Materials nach dem unabhängigen Anspruch 1 und eine Dosiervorrichtung nach dem unabhängigen Anspruch 11 gelöst.

Erfindungsgemäß ist ein Verfahren zum kontinuierlichen Dosieren eines nichtflüssigen Materials aus einem Behälter vorgesehen, insbesondere zum Eindosieren in eine Mehrkomponenten-Mischung, bei dem eine Fülldichte des Materials in einem vom Material eingenommenen Bereich des Behälters ermittelt und das Material mit einem im wesentlichen konstanten Massestrom durch eine Behälteröffnung aus dem Behälter ausgebracht wird, indem in Abhängigkeit von der ermittelten Fülldichte ein dem Massestrom entsprechender Volumenstrom durch die Behälteröffnung eingestellt wird.

Ferner ist erfindungsgemäß eine Dosiervorrichtung zum kontinuierlichen Dosieren eines nichtflüssigen Materials vorgesehen, mit: einem Behälter mit einer Behälteröffnung, einer Messeinrichtung, welche konfiguriert ist, um eine Fülldichte eines im Behälter angeordneten nichtflüssigen Materials zu bestimmen, einer mit der Messeinrichtung verbundenen Regeleinrichtung, welche konfiguriert ist, einen Volumenstrom des nichtflüssigen Materials, der einem im wesentlichen konstanten Massestrom entspricht, durch die Behälteröffnung in Abhängigkeit von der Fülldichte einzustellen.

Gegenüber bekannten Dosierverfahren bietet die Erfindung den Vorteil, dass auch nichtflüssige Materialien, insbesondere schüttfähige oder rieselfähige Materialien, auf kontinuierliche Weise dosiert werden können. Zur Dosierung wird zunächst eine Menge des nichtflüssigen Materials in einem Behälter eingebracht. Je nach Schüttverhalten des Materials können sich in dem Material Lufteinschlüsse bilden, so dass sich die Fülldichte des Materials in dem Behälter von seiner physikalischen Materialdichte unterscheidet. Die Fülldichte kann ermittelt werden, indem zunächst ein Volumen eines vom Material in dem Behälter eingenommenen Bereiches ermittelt und die Masse des Materials in dem Behälter durch das ermittelte Volumen geteilt wird. Nachdem die Fülldichte auf diese Weise ermittelt wurde, wird das Material durch die Behälteröffnung aus dem Behälter abgegeben, und zwar mit einem im wesentlichen konstanten Massestrom. Hierzu wird ein Volumenstrom des Materials durch die Behälteröffnung eingestellt, der von der ermittelten Fülldichte abhängt und dem gewünschten Massestrom entspricht. Ein konstanter Massestrom ist beispielsweise bei Mischvorgängen in einem Mischer für eine effektive Vermischung notwendig, da so der Massezuwachs in dem Mischer konstant gehalten und somit ein gleichbleibendes Mischverhältnis eingestellt werden kann.

In einer Weiterbildung der Erfindung ist vorgesehen, dass das Material mittels Bewegen eines bewegbar angeordneten Kolbens in den Behälter eingebracht und aus dem Behälter ausgebracht wird.

Bei einer zweckmäßigen Fortführung der Erfindung ist vorgesehen, dass der Massestrom eingestellt wird, indem eine Schubgeschwindigkeit des Kolbens geregelt wird. Bei einem gleichförmigen Querschnitt des Behälters kann für die Einstellung eines konstanten Massestroms eine konstante Schubgeschwindigkeit genutzt werden.

Bei einer vorteilhaften Weiterbildung der Erfindung ist vorgesehen, dass die Fülldichte aus der Masse des Materials in dem Behälter und einem Volumen des vom Material eingenommenen Bereichs abgeleitet wird. Handelt es sich bei dem vom nichtflüssigen Material eingenommenen Bereich um eine Kammer eines Dosierbehälters, so wird als Volumen das Kammervolumen verwendet, wenn die Kammer mit dem Material vollständig gefüllt ist. Vollständig gefüllt ist die Kammer auch, wenn infolge des Schüttverhaltens des Materials Lufteinschlüsse vorhanden sind.

In einer bevorzugten Ausbildung der Erfindung wird mittels eines mit dem Kolben verbundenen Wegaufnehmers eine vom Kolben zurückgelegte Wegstrecke erfasst und der Ermittlung des für die Ableitung bzw. Ermittlung der Fülldichte verwendeten Volumens zugrundegelegt.

In einer bevorzugten Ausführungsform der Erfindung ist vorgesehen, dass das Material aus einem mit dem Behälter verbundenen Materialspeicher entnommen und in den Behälter eingebracht wird.

In einer zweckmäßigen Fortführung der Erfindung ist vorgesehen, dass die Masse des Materials in dem Behälter als eine Differenz zwischen dem Gewicht des Materialspeichers vor und dem Gewicht des Materialspeichers nach dem Entnehmen des Materials berechnet wird. Dies hat den Vorteil, dass gleichzeitig die Menge des noch im Materialspeicher verbleibenden Materials überwacht werden kann, beispielsweise um rechtzeitig anzeigen zu können, wann das Material beinahe aufgebraucht ist.

In einer bevorzugten Ausbildungsform der Erfindung ist vorgesehen, dass das Material in dem Behälter mit einem vorbestimmten Druck beaufschlagt wird. Auf diese Weise kann von vornherein sichergestellt werden, dass das dosiert durch die Behälteröffnung tretende Material einen vorbestimmten Druck aufweist. Bei Verwendung des dosierten Materials in einer Mischvorrichtung kann es sich bei dem vorbestimmten Druck um einen Referenzdruck handeln, welcher in einem Bereich der Mischvorrichtung gemessen wird. Der Referenzdruck wird vorzugsweise in einer Mischkammer der Mischvorrichtung gemessen.

In einer zweckmäßigen Ausführungsform der Erfindung ist vorgesehen, dass der vorbestimmte Druck mittels Verändern des Volumens des vom Material eingenommenen Bereichs des Behälters eingestellt wird.

In einer vorteilhaften Ausführungsform der Erfindung ist vorgesehen, dass die Verfahrensschritte zeitversetzt mittels eines weiteren Behälters durchgeführt werden. Während das Material aus der Behälteröffnung ausgebracht wird, können in den weiteren Behälter eine weitere Menge des Materials eingeführt, dort eventuell sein Druck eingestellt und anschließend seine Fülldichte ermittelt werden. Sobald das Ausbringen des Materials aus dem Behälter abgeschlossen ist, kann dann mit dem Ausbringen des Materials aus dem weiteren Behälter begonnen werden. Das Dosierverfahren kann also in zwei Phasen, nämlich einer Kalibrierphase und einer Dosierphase unterteilt werden, während der das Material ausgebracht wird. Diese beiden Phasen können alternierend mittels des Behälters und des weiteren Behälters durchgeführt werden. Werden die Volumenströme des Materials aus dem Behälter und dem weiteren Behälter zu einem Gesamtfluss zusammengefasst, stellt diese Vorgehensweise sicher, dass der Gesamtfluss prinzipiell beliebig lang konstant gehalten werden kann. Vorzugsweise beträgt die Dauer der Kalibrierphase etwa 60% der Dauer der Dosierphase.

In einer zweckmäßigen Ausführungsform der Erfindung kann die Dosiervorrichtung mit einer Tränkungsanlage zum Tränken eines schichtförmigen Materials mit einem Material hoher Viskosität kombiniert werden. Eine derartige Tränkungsanlage weist einen Tränkungsbereich auf, welcher durch zumindest zwei einander zugewandten Flächen begrenzt ist und sich in eine Richtung verjüngt. Vorzugsweise ist zumindest eine der einander zugewandten Flächen mit einem nicht-haftenden Material beschichtet.

Eine der einander zugewandten Flächen der Tränkungsanlage ist vorzugsweise beweglich angeordnet. Vorzugsweise ist die bewegliche Fläche auf einem rotierbaren Zylinder gebildet, wobei die andere der einander zugewandten Flächen vorzugsweise auf einer Schale gebildet ist, welche fest montiert ist. Alternativ kann die andere der einander zugewandten Flächen auch beweglich montiert sein, wobei sie bevorzugt auf einem weiteren rotierbaren Zylinder gebildet ist. Vorzugsweise ist zumindest eine der einander zugewandten Flächen horizontal und / oder vertikal verlagerbar, um die Abmessungen des Tränkungsbereich einzustellen.

Zum Tränken eines schichtförmigen Materials mit einem Material hoher Viskosität kann das Material hoher Viskosität auf dem schichtförmigen Material angeordnet und dieses zwischen den zumindest zwei einander zugewandten Flächen durch den sich verjüngenden Tränkungsbereich bewegt werden. Aufgrund einer von einem oder von beiden der einander zugewandten Flächen auf das Material hoher Viskosität ausgeübten Kraft wird das Material hoher Viskosität in das schichtförmige Material gedrückt.

Wenn beide der einander zugewandten Flächen auf rotierbaren Zylindern gebildet sind, rotieren die Zylinder beim Tränken des schichtförmigen Materials mit dem Material hoher Viskosität vorzugsweise synchron.

Die beschriebene Tränkungsanlage kann auch unabhängig von der erfindungsgemäßen Dosiervorrichtung eingesetzt werden.

In einer zweckmäßigen Ausführungsform der Erfindung kann die Dosiervorrichtung mit einer Beschichtungsvorrichtung zum Beschichten eines Bauelementes mit zumindest einer Deckschicht kombiniert werden. Eine derartige Beschichtungsvorrichtung umfasst eine untere und eine obere Pressfläche, zwischen denen ein Arbeitsraum gebildet ist. Zumindest eine der Pressflächen umfasst vorzugsweise mehrere unabhängig voneinander ansteuerbare Heizfelder. Die Heizfelder können auf getrennten Heizplatten gebildet sein, zwischen denen vorzugsweise Dichtmittel zum Abdichten des Arbeitsraumes angeordnet sind.

Der Arbeitsraum ist vorzugsweise gegenüber einer Umgebungsatmosphäre fluid- und / oder vakuumdicht abgedichtet, wobei vorzugsweise eine Vakuumpumpe zum Evakuieren des Arbeitsraumes vorgesehen ist. Die Abdichtung wird vorzugsweise mittels Dichtmittel erreicht, welche selbstdichtend ausgeführt sind.

In einem Beschichtungsverfahren wird ein Bauelement mit einem Deckschichtmaterial in den Arbeitsraum der Beschichtungsvorrichtung angeordnet, und zwischen der oberen und der unteren Pressfläche wird ein Pressdruck erzeugt, um das Bauelement mit dem Deckschichtmaterial zu verbinden. Vorzugsweise wird in dem Arbeitsraum ferner ein Vakuum erzeugt, um den Pressdruck zu erhöhen. Ferner werden wird zumindest eine der Pressflächen beheizt.

Die beschriebene Beschichtungsvorrichtung kann auch unabhängig von der erfindungsgemäßen Dosiervorrichtung und / oder in Kombination mit der vorangehend beschriebenen Tränkungsanlage eingesetzt werden.

### Beschreibung von bevorzugten Ausführungsbespielen der Erfindung

Die Erfindung wird im folgenden anhand von Ausführungsbeispielen unter Bezugnahme auf die Figuren einer Zeichnung näher erläutert. Hierbei zeigen:
- Fig. 1: eine Dosiervorrichtung;
- Fig. 2: eine Flüssigmaterial-Mischvorrichtung;
- Fig. 3: eine Mischvorrichtung mit einer Dosiervorrichtung für nichtflüssige Materialien;
- Fig. 4: eine Tränkungsanlage;
- Fig. 5a und 5b: eine Querschnitts- und eine Seitenansicht der Tränkungsanlage aus der Fig. 4;
- Fig. 6a: eine weitere Tränkungsanlage;
- Fig. 6b: die weitere Tränkungsanlage aus der Fig. 6a in einer Ausführung ohne Glasfilamentgeweberollen;
- Fig. 7a und 7b: eine Querschnitts- und eine Seitenansicht der weiteren Tränkungsanlage aus der Fig. 6a; und
- Fig. 8: eine Beschichtungsvorrichtung zum Beschichten von Verbundplatten.

### Dosiervorrichtung

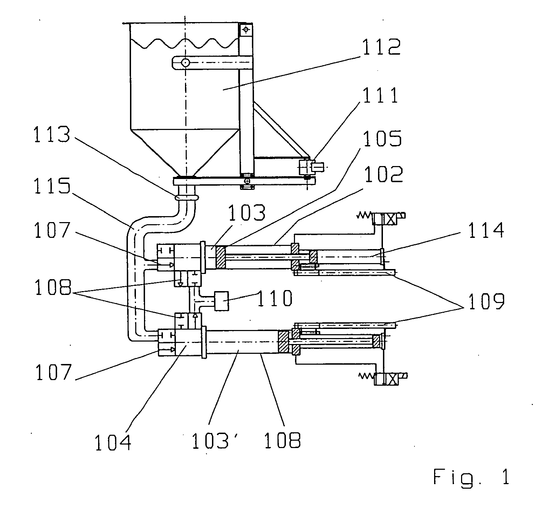

Fig. 1 zeigt eine Dosiervorrichtung 101 für nichtflüssige Materialien, insbesondere für klumpige oder pulverförmige Materialien. Die Dosiervorrichtung 101 umfasst einen Dosierbehälter 102, in welchem eine Kammer 103 gebildet ist. Ferner ist ein Kolben 105 vorgesehen, mit welchem das Volumen der Kammer 103 eingestellt werden kann. Der Kolben 105 ist mit einem Betätigungsmittel 114 verbunden, beispielsweise einem Hydraulikantrieb, mit dem der Kolben 105 in dem Dosierbehälter 102 bewegt werden kann. Ein mit dem Betätigungsmittel 114 verbundener Wegaufnehmer 109 misst den vom Kolben 105 zurückgelegten Weg. Die Kammer 103 ist über eine Kammeröffnung 104 mit einem Einlassventil 107 verbunden, durch welches das zu dosierende nichtflüssige Material in die Kammer 103 gelangt.

Das zu dosierende nichtflüssige Material befindet sich in einem Materialspeicher 112, welcher mittels einer Leitungsverbindung 113, beispielsweise eines Faltenbalgs, mit einer Zulaufleitung 115 und hierüber mit dem Einlassventil 107 verbunden ist. Das Gewicht des Materialspeichers 112 wird mittels einer Wägeeinrichtung 111 überwacht, beispielsweise einer Kraftmessebene. Wird das mit dem Materialspeicher 112 verbundene Einlassventil 107 geöffnet, kann eine Menge des Materials aus dem Materialspeicher 112 über eine Zulaufleitung 115 zum Einlassventil 107 des Dosierbehälters 102 gelangen. Von dort wird sie mittels Einziehen des Kolbens 105 in die Kammer 103 gesaugt. Anschließend wird das Einlassventil 107, welches mit der Wägeeinrichtung 102 verbunden ist, geschlossen. Aus der Differenz der mittels der Wägeeinrichtung 111 gemessenen Gewichte des Materialspeichers 112 vor und nach dem Ansaugen des Materials in die Kammer 103 kann die Masse der sich in der Kammer 103 befindliche Materialmenge bestimmt werden. Anschließend wird der Kolben 105 mittels des Betätigungsmittels 114 eingeschoben, um die Kammer 103 zu verkleinern und somit das sich in der Kammer 103 befindliche Material zu komprimieren, bis der Druck in der Kammer 103 einen gewünschten Wert entsprechend einem Referenzdruck erreicht hat.

Wenn die Dosierung für einen Mischprozess genutzt wird, kann es sich bei dem Referenzdruck um den Arbeitsdruck in einem Mischsystem handeln, oder es kann ein Referenzdruck einer anderen für die Mischung vorgesehenen Komponente verwendet werden. Aus der gemessenen Masse und dem zum Erreichen des Referenzdrucks notwendigen Volumen der Kammer 103 wird nun die Fülldichte des sich in der Kammer 103 befindenden Materials berechnet. Das Volumen, um welches sich die Kammer 103 verkleinert, wenn der Kolben 105 um ein bestimmtes Inkrement bewegt wird, ergibt sich aus der Geometrie des Dosierbehälters 102 und wird als Volumenindex bezeichnet. Aus der Fülldichte des Materials in der Kammer 103 und dem Volumenindex kann somit für jede Bewegungsgeschwindigkeit des Kolbens 105 die sich ergebende Massedosiergeschwindigkeit beim Hinausdrücken des Materials aus der Kammer 103 berechnet werden. Hierbei bezeichnet die Massedosiergeschwindigkeit die Masse der durch das Auslassventil 108 gedrückten Materialmenge pro Zeiteinheit.

Das vorangehend beschriebene Verfahren zum Dosieren des Materials lässt sich in zwei Phasen unterteilen. Während einer ersten Phase, der Kalibrierphase, wird das Material in die Kammer 103 des Dosierbehälters 102 eingeführt und mittels Bewegen des Kolbens 105 so komprimiert, dass sich ein gewünschter Druck einstellt. In einer zweiten Phase, der Dosierphase, wird das Auslassventil 108 geöffnet und das Material aus der Kammer 103 mittels Bewegen des Kolbens 105 in Richtung der Kammeröffnung 104 zum Dosierausgang 110 gedrückt. Um eine kontinuierliche Dosierung zu ermöglichen, ist es vorteilhaft, einen weiteren Dosierbehälter 108 mit einer weiteren Kammer (103') vorzusehen, wie dies in Fig. 1 gezeigt ist. Mit einer derartigen Anordnung kann die Kalibrierphase von einem der Dosierbehälter 102 (108) durchgeführt werden, während sich der andere Dosierbehälter 108 (102) in der Dosierphase befindet und das Material mit der gewünschten Massendosiergeschwindigkeit durch den Dosierausgang 110 drückt. Vorzugsweise ist die Dauer der Kalibrierphase kürzer, vorzugsweise um etwa 40 %, als die Dauer der Dosierphase.

Das Funktionsprinzip der Dosiervorrichtung 101 wird im folgenden weiter erläutert. Schütt- /rieselfähige Materialien haben keine reproduzierbare Fülldichte, da ihr Schüttverhalten und der Anteil an Luft pro Volumen nicht kontinuierlich messbar sind. Dies gilt in einem gewissen Umfang auch für Materialien mit sehr hoher Viskosität. Jedes schütt- / rieselfähige Material nimmt, wenn es in einem kalibrierten Behälter abgefüllt wird, ein definiertes Volumen ein, zu dem ein momentanes Gewicht gehört. Wird das Material mittels des Kolbens 105 zusammengepresst, so ändert sich das eingenommene Volumen, die Masse bleibt konstant. Physikalisch gesehen wird mit steigendem Druck das Volumen des vom Material eingenommenen Bereichs verändert. Damit verändert sich auch die Fülldichte, welche zunimmt. Wenn das Gewicht des in die Kammer 103 eingebrachten Materials und gleichzeitig der Hubweg des Kolbens 105 mittels eines digitalen Wegaufnehmers 109 ermittelt werden, ist es möglich, zu jedem in der Kammer 103 existierenden Druck die entsprechende Fülldichte zu ermitteln.

Beim Pumpen und Erfassen der Fördermenge in einer Dosiervorrichtung eines Mehrkomponenten-Mischsystems ist der Förderdruck, mit welchem die Förderpumpe belastet wird, von dem Strömungswiderstand in den Leitungen und der momentanen Materialtemperatur sowie der hiermit einhergehenden Viskositätsschwankung abhängig. Dieser Arbeitsdruck ist systembedingt. Er lässt sich kontinuierlich über einen Druckmessumformer als Analogsignal erfassen. Werden zwei Materialien miteinander vermischt, so kann dies nur bei gleichem Arbeitsdruck erfolgen. Da flüssige Materialien inkompressibel sind, bleiben ihre Dichten unter Druckänderung konstant. Ein zum Vermischen notwendiges (Masse-)Mischverhältnis ist in diesem Fall unabhängig vom Wert des Arbeitsdrucks, welcher in der Mischkammer vorliegt. Beim Vermischen von flüssigen mit pulverförmigen Materialien wird sich aufgrund eines systembedingt variablen Arbeitsdrucks und einer veränderlichen Schütt- oder Fülldichte des schütt- / rieselfähigen Materials kein konstantes Mischverhältnis eineichen lassen, auch wenn das System korrekt und fehlerfrei arbeitet.

Um dieses Problem zu lösen, wird das schütt- / rieselfähige Material bereits in dem Dosierbehälter 102 mit einem Druck beaufschlagt, welcher einem zuvor gemessenen Arbeitsdruck in der Mischkammer entspricht. Erst anschließend wird die Fülldichte des Materials in dem Dosierbehälter 102 ermittelt. Hierzu wird zunächst das Volumen des vom Material eingenommenen Bereichs des Dosierbehälters 102 ermittelt. Wenn die Kammer 103 des Dosierbehälters 102 mit dem Material gefüllt ist, wobei aufgrund des Schüttverhaltens des Materials Lufteinschlüsse vorhanden sein können, entspricht es dem Volumen der Kammer 103. Beim Bewegen des Kolbens 105 in dem Dosierbehälter 102 verändert sich das Volumen der Kammer 103. Diese Volumenänderung kann aus dem Wert der Arbeitsfläche des Kolbens 103 und der Wegstrecke, um welche der Kolben 103 bewegt wird, dem sogenannten Hubweg, ermittelt werden.

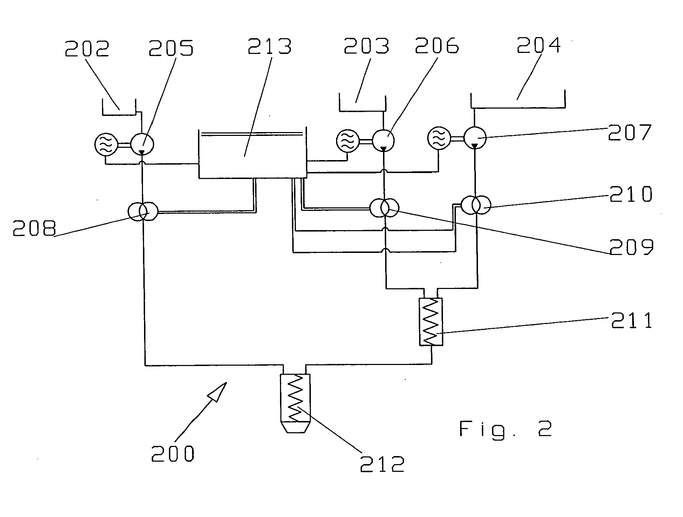

Fig. 2 zeigt eine Flüssigmaterial-Mischvorrichtung 200 zum Mischen von Komponenten eines Mehrkomponentenharzes, wobei dem Harz und dem Härter des Mehrkomponentenharzes ein flüssiges Material beigemischt wird. Die Flüssigmaterial-Mischvorrichtung 200 umfasst einen Harzspeicher 202, einen Härterspeicher 203 und einen Flüssigmaterialspeicher 204 zur Speicherung der Komponenten des Mehrkomponentenharzes. Die Speicher 202, 203, 204 sind jeweils mit einer zugehörigen Pumpe 205, 206, 207 verbunden, mit der die jeweilige Komponente (Harz, Härter, flüssiges Material) aus dem zugehörigen Speicher 202, 203, 204 gepumpt wird. Die Harzpumpe 205, die Härterpumpe 206 und die Flüssigmaterialpumpe 207 werden mittels eines elektronischen Mischungsreglers 213 gesteuert, welcher über einen Harzdurchflusszähler 208, einen Härterdurchflusszähler 209 und einen Flüssigmaterialdurchflusszähler 210 die jeweilige Durchflussgeschwindigkeit und somit die zugehörige Pumpgeschwindigkeit überwacht.

Als Pumpen 205, 206, 207 können beispielsweise Zahnradpumpen, Kolbenpumpen oder Schraubenspindelpumpen verwendet werden. Als Durchflusszähler oder volumetrischer Zähler werden im mittelviskosen Bereich beispielsweise Zahnradzähler (nicht dargestellt) eingesetzt. Hierbei erfasst ein Zähler mittels eines elektronischen Impulsgebers ein Impulssignal für jeden einzelnen Zahn des Zahnradzählers. Je nach Größe des Zählers wird diesem Impuls ein Volumenindex zugeordnet, der mittels eines elektronischen Rechners zu einem Durchfluss pro Zeiteinheit umgerechnet wird. Grundsätzlich werden dem Stand der Technik entsprechend nur inkrementelle Signale über eine Torzeit erfasst und ausgewertet. Nach dem gleichen Fördersystem wird bei allen weiteren flüssigen niederviskosen Zusätzen gearbeitet, wie Härter, Formtrennmittel und Treibmittel wie Pentan. Vorraussetzung ist der flüssige Zustand. Ebenso sind aus Kostengründen nur volumetrische Messverfahren im Einsatz, weil ein kontinuierliches Wiegen nicht möglich ist. Jedes volumetrische Meßsystem kann jedoch auf Massenkalibrierung umgeeicht werden, wenn vom Harz, Härter oder einer beliebigen anderen Flüssigkeit die Dichte als Eichgröße einem Rechner eingegeben wird. Hier kommen die oben beschriebene Dosiervorrichtung 101 und das Dosierverfahren zum Einsatz.

Es ist ferner ein Mischer 211 vorgesehen, um den Härter mit dem flüssigen Material zu vermischen. Da es sich bei den zu mischenden Komponenten um Flüssigkeiten handelt, wird hierfür ein statischer Mischer 211 verwendet. Sollen weitere flüssigen Materialien dem Mehrkomponentenharz beigemischt werden, so werden diese vorzugsweise zunächst dem Härter oder einem mittels des statischen Mischers 211 erzeugten Härter-Mischproduktes beigemengt. Schließlich erfolgt die Mischung des Harzes mit dem Härter-Mischprodukt in einem weiteren statischen Mischer 212. Vorzugsweise erfolgt das Mischen in dem weiteren statischen Mischer 212 kurz vor dem Verwenden des Mehrkomponentenharzes, beispielsweise in der Nähe einer Tränkungsanlage, wenn zum Beispiels mit dem Mehrkomponentenharz eine Faserplatte oder eine Faserbahn getränkt werden soll.

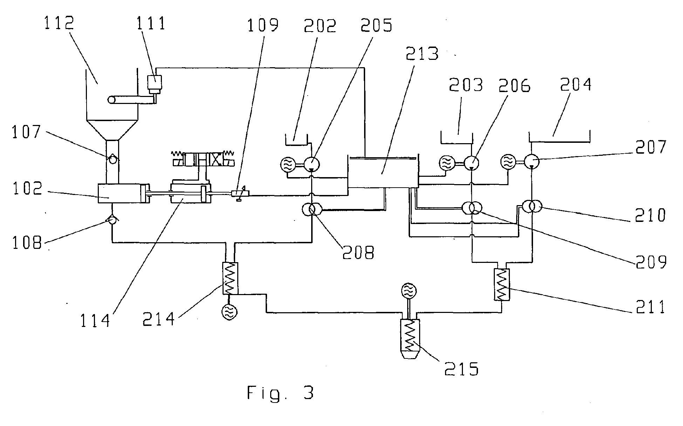

Fig. 3 zeigt eine Mischvorrichtung 201 mit einer Dosiervorrichtung für nichtflüssige Materialien. Wie im Zusammenhang mit der Fig. 1 erläutert, wird das nichtflüssige Material in einem Materialspeicher 112 aufbewahrt. Hierbei kann es sich beispielsweise um klumpige gar pulverförmige Materialien handeln. Über eine Leitungsverbindung 113 gelangt eine Menge des Materials in die Kammer 103 des Dosierbehälters 102. Dort findet zunächst eine Kalibrierung mittels der Bewegungsvorrichtung 114 und dem Wegaufnehmer 109 statt, wobei als Referenzdruck vorzugsweise der Druck verwendet wird, welcher in einem Mischer vorherrscht, der nachfolgend näher beschrieben wird. Während einer nachfolgenden Dosierphase wird das Material aus der Kammer 103 des Dosierbehälters 102 durch den Dosierausgang 110 gedrückt. Die in der Fig. 3 dargestellte Dosiervorrichtung umfasst lediglich einen Dosierbehälter 102. Vorzugsweise sind jedoch wie in der Fig. 1 dargestellt zwei Dosierbehälter 102, 108 vorgesehen, um eine ununterbrochene Dosierung zu gewährleisten. Das so dosierte Material wird wie vorzugsweise auch jedes weitere gewünschte pulverförmige Material mittels eines dynamischen Mischers 214 mit dem Harz vermischt, um ein Harz-Mischprodukt zu erhalten. Das bedeutet, flüssige Materialien sollten dem Härter oder einem Härter-Mischprodukt beigemischt werden, während nichtflüssige Materialien dem Harz beigemischt werden. In dem dynamischen Mischer 214 erfolgt ein aktives Mischen mittels Rotationsbewegungen eines Rührmittels. Es umfasst beispielsweise eine Rührwelle mit handelsüblicher Mischwendel, die mittels eines Getriebemotors angetrieben wird. Die weiteren Komponenten der Mischvorrichtung 201 entsprechen den aus der Fig. 2 bekannten Komponenten der Flüssigmaterial-Mischvorrichtung 200. Da jedoch im vorliegenden Fall ein nichtflüssiges Material beigemischt wird, muss der weitere statische Mischer 212 durch einen weiteren dynamischen Mischer 215, dem Hauptmischer 215, ersetzt werden, in welchem das zuvor erzeugte Harz-Mischprodukt mit dem Härter-Mischprodukt vermischt wird.

Das den in den Fig. 2 und 3 dargestellten Mischvorrichtungen 200, 201 zugrundeliegende Arbeitsprinzip wird im folgenden weiter erläutert. Mehrkomponenten-Mischvorrichtungen für Harze sind voll elektronisch gesteuerte Einheiten. Grundprinzip ist es, ein Fördervolumen zum sogenannten "Master" zu machen und sämtliche weitere Materialströme diesem Wert anzupassen. Als sogenanntes Mastervolumen wird stets das größte Fördervolumen verwendet. Hierzu eignet sich immer eine zu fördernde Harzmenge. Sämtliche übrigen Fördermengen werden auf dieses Mastervolumen bezogen und im Verhältnis einer optimalen chemischen Reaktion dosiert. So dosiert der elektronische Mischungsregler 213 das Mischungsverhältnis zwischen Harz und Härter oder zwischen Harz und einem Formtrennmittel im korrekten Verhältnis. Bezugsgröße ist immer das Mastervolumen und nicht das Fördervolumen einer schon vorbereiteten Mischung. Grundsätzlich ist festzuhalten, dass sämtliche Zusatzstoffe, die zum eigentlichen Prozess "Vermischen von Harz und Härter" zugemischt werden, entweder mit dem Harz oder mit dem Härter vermengt werden. Nur in einer Vorabvermischung ist das Produkt bedingt lagerfähig. In der Prozessfolge werden anschließend das Harz-Mischprodukt und das Härter-Mischprodukt miteinander vermischt. Für flüssige Komponenten erfolgt das Mischen in einem statischen Mischer, bei Vorhandensein pulverförmiger Komponenten in einem dynamischen Mischer.

### Tränkungsanlage

Tränkungsanlagen dienen dazu, kontinuierlich Faserbahnen, insbesondere Glasfaserbahnen oder Glasfasermatten, mit dosiertem Tränkungsmittel zu tränken, beispielsweise Gießharz. Es können jedoch ebenso Faserbahnen aus anderen Materialien verwendet werden. Üblicherweise wird durch ein Bad, welches mit einem flüssigen Harz/Härter-Gemisch gefüllt ist, eine Glasfaserbahn gezogen und diese, über Rollen geführt, intensiv mit dem flüssigen Gemisch getränkt. Hierfür wird die Glasfaserbahn von einer Vorratsrolle abgerollt, über zwei Umlenkrollen in das Tauchbad eingetaucht und, über eine Tauchrolle im Bad geführt, auf eine Wickeltrommel aufgespindelt. Ist diese Wickeltrommel gefüllt, wird die getränkte Glasfaserbahn entnommen und auf einem zu erstellenden Bauvorhaben ausgerollt.

Nachteil dieses Verfahrens ist es, dass nur dünnflüssige Harz/Härter-Gemische verwendet werden können. Bei mittel- oder hochviskösen Harzen ist kein Eindringen in die und Vernetzung in der Glasfaserbahn möglich. Außerdem kann dieses Verfahren nicht in eine kontinuierlich arbeitende Ablaufproduktion eingebaut werden, da keine variable kontinuierliche Durchlaufgeschwindigkeit durch das Tränkungsbad eingestellt werden kann. Ebenso lässt sich keine Regelgröße zur Einstellung des Harz/Härter-Zuflusses abgreifen, weil die Anlagen pneumatisch betrieben werden.

Grundsätzlich ist es bei Tränkungsanlagen für Tränkungsmittel mittlerer oder hoher Viskosität notwendig, ein aktives Einpressen in die Glasfaserbahn durchzuführen. Bei den bekannten Systemen wird allein über die Umlenkung an der Tauchrolle ein gewisser Quetschdruck erzeugt.

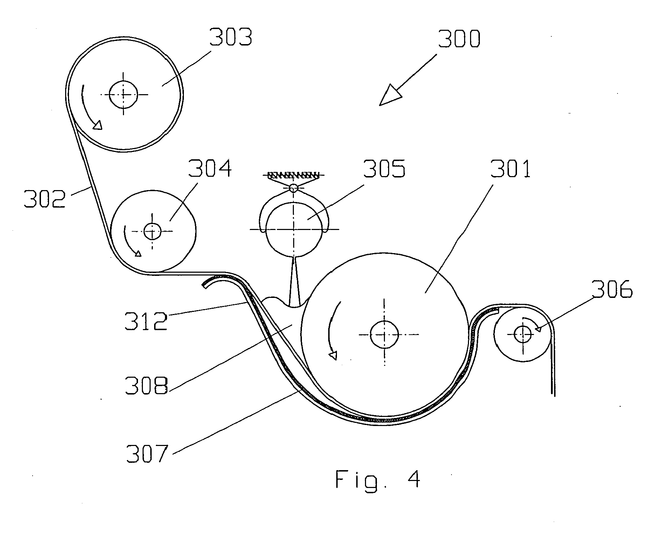

Fig. 4 zeigt eine Tränkungsanlage 300 für niedrig- bis mittelviskose Tränkungsmittel mit einer Tränkungsschale 307, hier einem halbrunden Rohr, und einer sich drehenden Tränkungstrommel 301. Ein zu tränkendes Element, beispielsweise eine Glasfasermatte 302, wird so durch die Tränkungsanlage 300 bewegt, dass es zwischen der Tränkungsschale 307 und der Tränkungstrommel 301 geführt wird. Aufgrund der Geometrie der Tränkungsschale 307 bildet sich zwischen dieser und der Tränkungstrommel 301 ein sich verengernder Tränkungsbereich 308. In diesem Bereich wird ein Tränkungsmittel, beispielsweise ein Mehrkomponentenharz, mittels einer Speiselanze 305 auf die Glasfasermatte 302 aufgetragen. Es handelt sich bei der Speiselanze 305 beispielsweise um ein schlitzförmig aufgetrenntes Rohr, das von außen mittels einer Bügelfeder zusammengedrückt wird. Der Zufluss erfolgt über beide Rohrenden. Herrscht in dem geschlitzten Rohr kein Förderdruck, so bleibt die mittels des Aufschlitzens gebildete Austrittsöffnung verschlossen. Bei einer beginnenden Förderung öffnet sich ein der Menge angepasster Spalt durch den entstehenden Förderdruck und ein konstanter Film ergießt sich in den Tränkungsbereich 308. Da sich der Tränkungsbereich 308 zwischen der Tränkungstrommel 301 und der Tränkungsschale 307 verengt, wird das Tränkungsmittel in die Glasfasermatte 302 gedrückt.

Vor dem Durchlaufen der Tränkungsanlage 300 ist die Glasfasermatte 302 auf einer Glasfaserrolle 303 aufgerollt, von welcher sie über eine Umlenkrolle 304 in den Tränkungsbereich geführt wird. Vorzugsweise liegt die Glasfasermatte 302 als eine Glasgewebematte vor.

Die Glasfasermatte 302 wird mittels der Umlenkrolle 304 auf eine Einlaufbahn gedrückt und bildet aufgrund des ungetränkten Zustandes eine komplette Abdichtung nach außen. Nach dem Tränken mit dem Tränkungsmittel wird die Glasfasermatte 302 über eine Auflegerolle 306 weitergeführt, beispielsweise um anschließend einer Beschichtungsvorrichtung zugeführt zu werden. Die getränkte Glasfasermatte 302 kann jedoch auch aufgerollt und zur späteren Verwendung gelagert werden.

Die Auflegerolle 306 hat die Aufgabe, die getränkte Glasfasermatte 302 umzulenken und gegebenenfalls auf einem Fertigungstisch aufzulegen. Notwendig ist diese Rolle, um ein Aufstauen der Glasfasermatte 302 zu vermeiden. Die Auflegerolle 306 muss durch Wahl des korrekten Übersetzungsverhältnisses die gleiche Umfangsgeschwindigkeit wie die Tränkungstrommel 301 haben.

Um die gesamte Tränkungsanlage 300 in einen Regelkreis eingliedern zu können, wird die Antriebstrommel mit einem inkrementellen oder analogen Drehzahlgeber ausgestattet. Mit dem hierdurch erzeugten Messwert wird beispielsweise das Fördervolumen einer Gießharzmenge in einem Vierkomponentenharz-Mischsystem als Sollwert vorgegeben.

Die Tränkungsschale 307 ist vorzugsweise mit einer nicht haftenden Beschichtung 312 ausgekleidet. Hierfür wird beispielsweise eine Beschichtung 312 aus Polypropylen verwendet, um ein Haften des Tränkungsmittels zu vermeiden. Die sich drehende Tränkungstrommel 301 ist aufgerauht und mit einer Teflonschicht überzogen. Durch den sich verengenden Tränkungsbereich 308 in Form eines sichelförmigen Spaltes wird die zu tränkende Glasfasermatte 302 hindurch gefördert. Hierzu wird die Tränkungstrommel 301 mit einer stufenlos veränderlichen Drehzahl über einen Getriebemotor angetrieben.

Die aufgetrommelte Glasfasermatte 302 ist außerhalb des Tränkungsbereichs angeordnet.

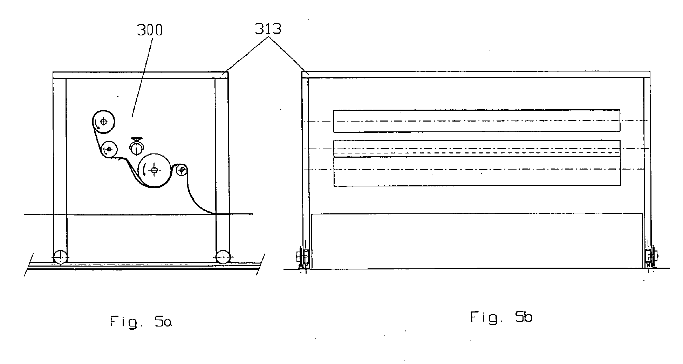

Eine Querschnitts- und eine Seitenansicht der Tränkungsanlage 300 aus der Fig. 4 sind in den Fig. 5a und 5b dargestellt. Die Tränkungsanlage 300 ist in einer Rahmenstruktur 313 angeordnet.

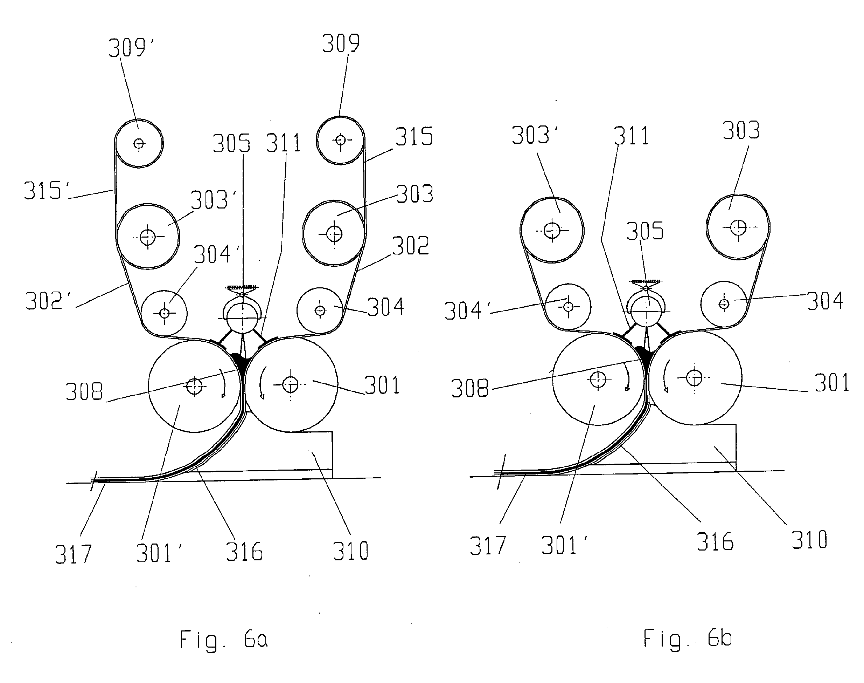

Die Fig. 6a zeigt eine weitere Tränkungsanlage 320 zum Tränken von Glasfasermatten 302, 302' mit einem Tränkungsmittel, beispielsweise einer Vergussmasse. Die weitere Tränkungsanlage 320 ist dazu geeignet, zwei Glasfasermatten 302, 302' aneinander zu drücken, während diese gleichzeitig mit dem Tränkungsmittel aus der Speiselanze 305 getränkt werden. Die weitere Tränkungsanlage 320 ist insbesondere für Tränkungsmittel mittlerer bis hoher Viskosität geeignet, beispielsweise für mittelviskose Gießharze.

Anders als bei der Tränkungsanlage 300 aus der Fig. 4 sind hier zwei Tränkungstrommeln 301, 301' vorgesehen, welche sich in entgegengesetzter Richtung drehen und zwischen denen der sich verengende Tränkungsbereich 308 ausgebildet ist. Das Tränkungsmittel wird in dem Tränkungsbereich 308 zwischen die Glasfasermatten 302, 302' aufgetragen und aufgrund der Bewegung der Glasfasermatten 302, 302' durch den sich verengenden Tränkungsbereich in diese hineingedrückt.

Die Viskositäten mittelviskoser Gießharze liegen im Bereich von 2000 bis 10.000 mPas. Gießharze in diesem Viskositätsbereich verlieren aufgrund hoher Mengen an Füllstoffen ihre Tränkungseigenschaften. Das Material ist nach dem Stand der Technik nur durch Aufgießen auf das Trägermaterial und intensives Einrollen per Hand mit Laminierrollen zu verarbeiten gewesen, eine kontinuierliche mechanische Tränkung war nicht möglich. Ein Verfahren zur großflächigen Auftragung wird notwendig, wenn dickwandige mit Füllstoffen und Treibmitteln wie Pentan zugesetzte Schichten erforderlich sind.

Das Tränkungsverfahren zum Tränken der Glasfasermatten 302, 302' mit einem mittelviskosem Gießharz wird im Folgenden näher erläutert. Als Grundprinzip wird ein Verfahren verwendet, bei dem ähnlich dem mechanischen Einrollen ein flächiger, sich verstärkender Druck auf die Matte entsteht. Das Gießharz selbst in kleinen Mengen ist nicht mehr tropffähig, sondern fällt in größeren Klumpen aus. Der Abstand zwischen den Tränkungstrommeln 301, 301' lässt sich durch Achsverschiebung in horizontaler Richtung verstellen. Der Öffnungsspalt liegt vorzugsweise zwischen 2 und 20 mm. Beide Tränkungstrommeln 301, 301' haben synchrone Drehzahlen und werden gegenläufig angetrieben. Der Antrieb erfolgt über einen Getriebemotor, welcher ein außen verzahntes Verteilergetriebe mit gleicher Übersetzung antreibt. Auf zwei Außenwellen sind zwei Zahnriemenscheiben gleicher Größe angeordnet, die ihrerseits das Drehmoment über je einen Zahnriemen auf die Tränkungstrommeln 301, 301' übertragen. Die auf den Tränkungstrommeln 301, 301' vorhandenen Riemenscheiben haben die gleiche Größe. Eine von zwei Trommelwellen ist starr angeordnet, während die zweite um den Mittelpunkt der entsprechenden Achse des Verteilergetriebes um einen bestimmten Wert verstellbar ist.

Glasfasermatten eignen sich besonders bei mittelviskosen Gießharzen. Hierbei werden handelsüblich kurze Glasfasern verwendet, die zu einer Matte verpresst sind. Alternativ können auch andere Fasermaterialien verwendet werden. In den zwischen Fasern vorhandenen großporigen Zwischenräumen dringt das Gießharz blasenfrei ein. Um ein möglichst langes Umschlingen auf den Tränkungstrommeln 301, 301' zu erreichen, sind zwei Umlenkrollen 304, 304' vorgesehen. Diese erhalten einen Antrieb über je einen Zahnriemen (nicht dargestellt), bei dem das Übersetzungsverhältnis der Riemenscheiben so zu wählen ist, dass die Tränkungstrommeln 301, 301' und die Umlenkrollen 304, 304' gleiche Umfangsgeschwindigkeiten besitzen. Eine kleinere Scheibe wird an jede Tränkungstrommel 301, 301' gekuppelt, während deine größere Scheibe an der Umlenkrolle fixiert ist.

Sowohl die Umlenkrollen 304, 304' als auch die Tränkungstrommeln 301, 301' werden vorzugsweise mit einer Beschichtung, beispielsweise einem Teflonmantel, überzogen, um ein Verkleben zu vermeiden. Soll eine besonders glatte Oberfläche erreicht werden, so werden oberhalb der bisher beschriebenen Glasfaserrollen 303, 303' zwei weitere Aufnahmerahmen mit Glasfilamentgeweberollen 309, 309' installiert, die zur Aufnahme von Rollen mit aufgerolltem Glasfilamentgewebe 315, 315' dienen. Das Glasfilamentgewebe 315, 315' ist ein leichtes engmaschiges Gewebe mit geringem Gewebegewicht. Es wird außerhalb der Umlenkrollen 304, 304' geführt und über den Trommelmantel der jeweiligen Tränkungstrommel 301, 301' abgerollt. Aufgrund seiner Stärke von maximal 0,1 mm ist ein Eindringen von reinem Gießharz problemlos. Oberhalb der beiden angetriebenen Tränkungstrommeln 301, 301' bildet sich durch die Abgrenzung über die eingelegten Glasfasermatten und das Glasfilamentgewebe 315, 315' der Tränkungsbereich 308 in Form einer Gießtasche, in die das Gießharz gefüllt wird. Die Gießtasche ist über der gesamten Mantellänge der Tränkungstrommeln 301, 301' vorhanden. In diese Gießtasche wird über die Speiselanze 305 das Gießharz gefördert. Die Funktion der Speiselanze 305 ist bereits bei der Tränkungsanlage 300 für leichtviskose Tränkungsmittel erklärt worden. Um ein Austreten von Gießharz in einen Raum oberhalb des Tränkungsbereichs 308 zu vermeiden, wird über die gesamte Mantellänge ein Abdeckblech 311 gezogen, das ein Austreten und Aushärten von Gießharz vermeidet. Unterhalb einer vorzugsweise nicht verstellbaren der Tränkungstrommeln 301, 301' wird der Umlenkrahmen 310 angeordnet. Der Umlenkrahmen 310 hat die Aufgabe, die austretenden Glasfasermatten 302, 302', welche zusammen eine getränkte Schichtfolge 317 bilden, so umzulenken, das sie faltenfrei auf einem Trägermaterial aufgelegt werden können.

Der Umlenkrahmen 310 erstreckt sich über die gesamte Trommelmantellänge. Zwischen dem Trommelmantel und dem Umlenkrahmen 310 wird der Abstand so minimiert, dass zum einen keine Drehbehinderung durch direktes Anliegen und Bremsen erfolgt und zum anderen ein Austreten von Gießharz verhindert wird.

Die offene Seite des Umlenkrahmens 310 ist vorzugsweise mit einer Umlenkrahmenbeschichtung 316 ausgekleidet, beispielsweise aus einem Kunststoffmaterial wie Polypropylen. Das absolute nicht Haften von Gießharz auf Polypropylen garantiert ein ungehindertes Abgleiten in horizontaler Richtung.

Bei konstanter Drehzahl der beiden Tränkungstrommeln 301, 301' wird die Schichtenfolge 317 aus Glasfilamentgewebe 315, 315' und den Glasfasermatten 302, 302' in den sich verengenden Tränkungsbereich 308 gefördert. Das Gießharz dringt aufgrund des sich verengenden Tränkungsbereichs 308 aktiv in die Schichtenfolge 317 ein und tränkt diese intensiv.

Um die weitere Tränkungsanlage 320 in einen Regelkreis einzugliedern, wird eine der Tränkungstrommeln 301, 301' mit einem inkrementellen oder analogen Drehzahlgeber ausgestattet. Mit einem Messwert, welchen der Drehzahlgeber erzeugt, wird gleichzeitig das Fördervolumen der Gießharzmenge beispielsweise in einem Vierkomponentenharz-Mischsystem als Sollwert vorgegeben. Ebenfalls dient dieser Messwert als Sollwert für die Rollgeschwindigkeit eines Tränkungswagens (nicht dargestellt). Als Regelgröße gilt beispielsweise das gleichmäßige faltenfreie Auflegen der getränkten Schichtenfolge auf einem Fertigungstisch. Die Antriebsdrehzahl muss so angepasst sein, dass kein Unterschied in der Abrollgeschwindigkeit und der Auflagegeschwindigkeit vorhanden ist.

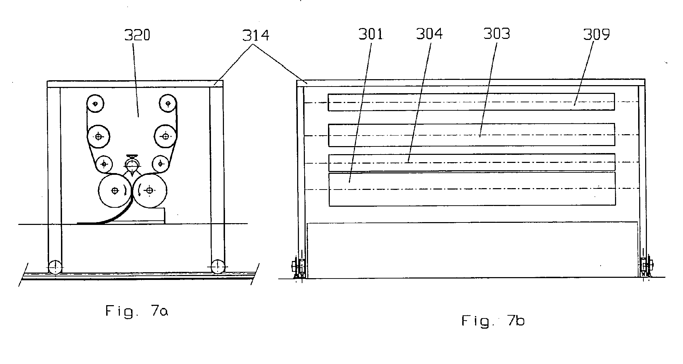

Die Fig. 7a und 7b zeigen eine Querschnitts- und eine Seitenansicht der weiteren Tränkungsanlage 320 aus der Fig. 6a. Die weitere Tränkungsanlage 320 ist in einer weiteren Rahmenstruktur 314 angeordnet.

### Beschichtungsvorrichtung

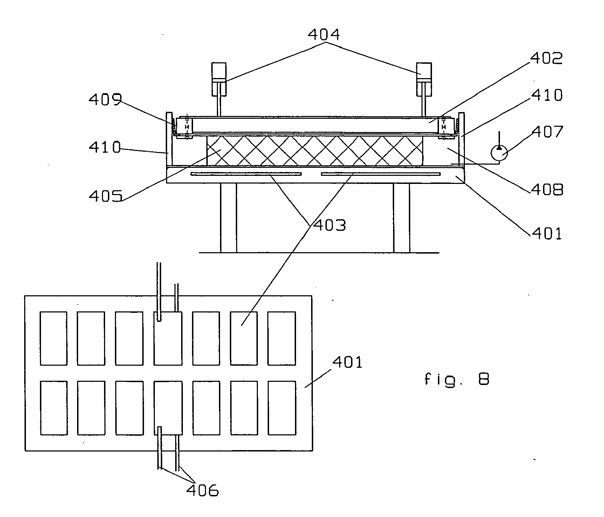

Zum Beschichten eines flächigen Bauelementes 405, beispielsweise mit harzgetränkten Glasfasermatten 302 oder Schichtenfolgen 317 mit Glasfasermatten 302/302', wird eine Beschichtungsvorrichtung 400 verwendet, wie sie in der Fig. 8 dargestellt ist. Die Beschichtungsvorrichtung 400 umfasst eine untere Pressplatte 401 und eine obere Pressplatte 402 zwischen denen ein Arbeitsraum 408 gebildet ist, in welchem das flächige Bauelement 405 mit einer harzgetränkten Schicht angeordnet wird. Der Arbeitsraum 408 wird seitlich durch die Seitenwände 410 begrenzt. Eine Abdichtung zwischen den Seitenwänden 410 und der oberen Pressplatte 402 und / oder der unteren Pressplatte 401 erfolgt mit Hilfe von Dichtungsmitteln 409, beispielsweise Lippendichtungen oder Dichtleisten.

Die untere Pressplatte 401 und / oder die obere Pressplatte 402 umfassen jeweils zumindest ein Heizfeld 403 zum Beheizen ihrer Oberflächen. Vorzugsweise sind mehrere getrennt voneinander beheizbare Heizfelder 403 vorgesehen. Die in der Fig. 8 dargestellte untere Pressplatte 402 umfasst beispielsweise 14 Heizfelder 403. Die Heizfelder 403 können einzeln oder in Gruppen getrennt ansteuerbar sein.

In einer bevorzugten Ausführungsform erfolgt die Energiezufuhr zu den Heizfeldern 403 über elektrische Leitungen 406. Ferner ist es vorteilhaft, bei der Beschichtungsvorrichtung 400 Temperaturmessgeräte (nicht dargestellt) vorzusehen, beispielsweise einen Pt100 Temperaturfühler, welche elektronisch ausgelesen werden, um als Reaktion auf die gemessenen Temperaturen die Ansteuerung der Heizfelder 403 zu steuern. Die untere Pressplatte 401 und / oder die obere Pressplatte 402 sind mit Pressmittel 404 verbunden, mit deren Hilfe die Pressplatten 401, 402 aneinander gedrückt werden. Wenn gleichzeitig mit Bestätigung der Pressmittel 404 die Heizfelder 403 angesteuert werden, um die Pressplatten 401, 402 an den gewünschten Stellen aufzuheizen, so erfolgt eine Auflaminierung der harzgetränkten Schicht auf das flächige Bauelement 405. Um die Presswirkung zu erhöhen und / oder zu bewirken, dass das Harz aus der harzgetränkten Schicht in das flächige Bauelement 405 eindringt, beispielsweise wenn es sich bei dem flächigen Bauelement 405 um ein Schaumstoffkern handelt, ist eine Vakuumpumpe 407 vorgesehen, welche die Luft aus dem Arbeitsraum 408 evakuiert.

Die Pressplatten 401, 402 weisen eine Breite von etwa 500 bis 3.000 mm und eine Länge von etwa 5.000 bis 30.000 mm auf. Zumindest die untere Pressplatte 401 muss vollkommen planparallel sein und wird vorzugsweise aus eloxierten Aluminiumblechen mit einem Untergestell hergestellt. Die Pressplatten 401, 402 erhalten elektrisch separat beheizbare Heizfelder 403 mit eigenem Regelkreis. Die Seitenwände 410 werden vertikal an den vier Seiten um etwa 200 bis 400 mm hochgezogen und, sind bevorzugt aus einem glatten, eloxierten Flachmaterial hergestellt.

Das Verfahren zur Herstellung von Bauplatten mit auflaminierten Beschichtungen wird im Folgenden an einem Beispiel erläutert: Auf der Oberfläche der unteren Pressplatte 401 wird eine Glasfasermatte, die mit Gießharz getränkt wurde, aufgelegt und mittels einer rollenden Walze poren-, falten- und Luftblasen frei ausgewalzt. Auf die so entstandene Unterbahn wird das flächige Bauelement 405, beispielsweise ein Schaumstoffträger, in der Stärke von 10 bis 400 mm eingelegt. Der Schaumstoffträger wird ebenfalls übergewalzt, um ein porenfreies Verkleben zwischen Unterbahn und Schaumstoffträger zu erreichen.

Auf den gerollten Schaumstoffträger wird eine weitere harzgetränkte Schicht aufgelegt. Diese Schicht wird ebenfalls mittels der Walze übergerollt, um eine glatte und porenfreie Oberfläche zu erhalten. Über die gesamte Oberfläche der harzgetränkten Schicht wird die obere Pressplatte 402 aufgelegt, welche mehrere Wärmeplatten (nicht dargestellt) umfassen kann, die jeweils an der Unterseite eine glatte, aus eloxiertem Aluminiumblech hergestellte Heizfläche aufweisen. An Stirn- und Seitenflächen sind Dichtleisten vorgesehen, die sowohl die beweglichen Heizplatten zueinander abdichten als auch den Arbeitsraum 408 vakuumdicht verschließen. Durch den Einsatz einer Vakuumpumpe mit etwa 20 % bis 40 % Vakuumdruck verpressen sich obere und untere Pressplatte 401, 402 und erzeugen so homogene, glatte Oberflächen auf der so gebildeten Bauplatte.

Die Pressplatten 401, 402 bewirken im geschlossenen elektrischen Regelkreis ein konstantes Aufheizen sowohl von unten als auch von oben und führen zu einem Aushärten des Gießharzes. Das kontrollierte Aufheizen hat zur Folge, dass ein homogener reproduzierbarer Prozess abläuft. Ebenfalls wird durch das Absaugen von Luft aus dem Schaumstoff und dem erhöhten Flächendruck auf die harzgetränkten Schichten ein Eindringen von flüssigem Gießharz in den Schaumstoffträger erreicht.

Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausführungsformen von Bedeutung sein.

## Patentansprüche

1. Verfahren zum kontinuierlichen Dosieren eines nichtflüssigen Materials aus einem Behälter (102), insbesondere zum Eindosieren eines nichtflüssigen Materials in eine Mehrkomponenten-Mischung, wobei eine Fülldichte des Materials in einem vom Material eingenommenen Bereich (103) des Behälters (102) ermittelt und das Material mit einem im wesentlichen konstanten Massestrom durch eine Behälteröffnung (104) aus dem Behälter ausgebracht wird, indem in Abhängigkeit von der ermittelten Fülldichte ein dem Massestrom entsprechender Volumenstrom durch die Behälteröffnung (104) eingestellt wird.

2. Verfahren nach Anspruch 1, **dadurch gekennzeichnet, dass** das Material mittels Bewegen eines bewegbar angeordneten Kolbens (105) in den Behälter (102) eingebracht und aus dem Behälter (102) ausgebracht wird.

3. Verfahren nach Anspruch 2, **dadurch gekennzeichnet, dass** der Massestrom eingestellt wird, indem eine Schubgeschwindigkeit des Kolbens (105) geregelt wird.

4. Verfahren nach einem der vorangehenden Ansprüche, **dadurch gekennzeichnet, dass** die Fülldichte aus der Masse des Materials in dem Behälter (102) und einem Volumen des vom Material eingenommenen Bereichs (103) abgeleitet wird.

5. Verfahren nach Anspruch 2 oder 3 und Anspruch 4, **dadurch gekennzeichnet, dass** mittels eines mit dem Kolben (105) verbundenen Wegaufnehmers (109) eine vom Kolben (105) zurückgelegte Wegstrecke erfasst und der Ermittlung des für die Berechnung der Fülldichte verwendeten Volumens zugrundegelegt wird.

6. Verfahren nach einem der vorangehenden Ansprüche, **dadurch gekennzeichnet, dass** das Material aus einem mit dem Behälter (102) verbundenen Materialspeicher (112) entnommen und in den Behälter (102) eingebracht wird.

7. Verfahren nach Anspruch 6, **dadurch gekennzeichnet, dass** die Masse des Materials in dem Behälter (102) als eine Differenz zwischen dem Gewicht des Materialspeichers (112) vor und dem Gewicht des Materialspeichers (112) nach dem Entnehmen des Materials berechnet wird.

8. Verfahren nach einem der vorangehenden Ansprüche, **dadurch gekennzeichnet, dass** das Material in dem Behälter (102) mit einem vorbestimmten Druck beaufschlagt wird.

9. Verfahren nach Anspruch 8, **dadurch gekennzeichnet, dass** der vorbestimmte Druck mittels Verändern des Volumens des vom Material eingenommenen Bereichs (103) des Behälters (102) eingestellt wird.

10. Verfahren nach einem der vorangehenden Ansprüche, **dadurch gekennzeichnet, dass** die Verfahrensschritte zeitversetzt mittels eines weiteren Behälters (108) durchgeführt werden.

11. Dosiervorrichtung zum kontinuierlichen Dosieren eines nichtflüssigen Materials, mit: - einem Behälter (102) mit einer Behälteröffnung (104);
- einer Messeinrichtung, welche konfiguriert ist, um eine Fülldichte eines im Behälter (102) angeordneten nichtflüssigen Materials zu bestimmen; und
- einer mit der Messeinrichtung verbundenen Regeleinrichtung, welche konfiguriert ist, um einem im wesentlichen konstanten Massestrom entsprechend einen Volumenstrom des nichtflüssigen Materials, durch die Behälteröffnung (104) in Abhängigkeit von der Fülldichte einzustellen.

12. Dosiervorrichtung nach Anspruch 11, **gekennzeichnet durch** einen mit dem Behälter verbundenen Materialspeicher (112) mit einer hiermit verbundenen Wägeeinrichtung (111).

13. Dosiervorrichtung nach Anspruch 11 oder 12, **gekennzeichnet durch** Druckmittel zum Einstellen eines vorbestimmten Druckes in dem Behälter (102).

14. Dosiervorrichtung nach einem der Ansprüche 11 bis 13, **gekennzeichnet durch** einen in dem Behälter (102) bewegbar angeordneten Kolben (105) zum Verändern eines Volumens einer Kammer (103) in dem Behälter (102).

15. Dosiervorrichtung nach Anspruch 14, **gekennzeichnet durch** einen mit dem Kolben (105) verbundenen Wegaufnehmer (109).

16. Dosiervorrichtung nach einem der Ansprüche 11 bis 15, **gekennzeichnet durch** einen weiteren Behälter (108).
